# EUROPEAN PATENT SPECIFICATION

(11) **EP 1 934 658 B1**
(45) Date of publication and mention of the grant of the patent: **02.09.2009**
(21) Application number: 06809459.8
(22) Date of filing: 02.10.2006
(51) Int. Cl.: G05B 17/02

(54) **DETERMINING STATES OF A PHYSICAL SYSTEM BY AN OBSERVER**
BESTIMMUNG DER ZUSTÄNDE EINES PHYSIKALISCHEN SYSTEMS DURCH EINEN BEOBACHTER
DETERMINATION DES ETATS D'UN SYSTEME PHYSIQUE PAR UN OBSERVATEUR

(30) Priority: 05.10.2005 EP 05109215
(43) Date of publication of application: 25.06.2008
(73) Proprietor: Koninklijke Philips Electronics N.V., 5621 BA Eindhoven (NL); Philips Intellectual Property & Standards GmbH, 20099 Hamburg (DE)
(72) Inventor: SCHEEL, Thomas, NL-5656 AA Eindhoven (NL); LUERKENS, Peter, NL-5656 AA Eindhoven (NL)
(74) Representative: Bekkers, Joost J.J
(86) International application number: PCT/IB2006/053578
(87) International publication number: WO 2007/039860

(56) References cited:
- JP-A- 2002 054 948
- US-A1- 2003 161 426
- GEORGE ELLIS, JENS KRAH: "Observer-based Resolver Conversion in Industrial Servo Systems" [Online] 21 June 2001 (2001-06-21), PCIM 2001 CONFERENCE , NÜRNBERG, GERMANY , XP002425518 Retrieved from the Internet: URL:http://www.motionvillage.com/welcome_c enter/articles/pcim2001rd_observer.pdf> [retrieved on 2007-03-19] cited in the application page 1 - page 6
- KYEONG-HWA KIM ET AL: "A Nonlinear Speed Control for a PM Synchronous Motor Using a Simple DisturbanceEstimation Technique" IEEE TRANSACTIONS ON INDUSTRIAL ELECTRONICS, IEEE SERVICE CENTER, PISCATAWAY, NJ, US, vol. 49, no. 3, June 2002 (2002-06), XP011073717 ISSN: 0278-0046

## Description

### FIELD OF THE INVENTION

The invention relates to a method for determining estimated states of a physical system by using an observer according to the preamble of claim 1 and to an observer according to the preamble of claim 3.

### BACKGROUND OF THE INVENTION

A method of the above type is disclosed in an article "Observer-based Resolver Conversion in Industrial Servo Systems", PCIM 2001 Conference, June 21, 2001, Nürnberg, Germany, by George Ellis and Dr. Jens Krah (http://www.motionvillage.com/welcome_center/articles/pcim2001rd_observer.pdf).

Observers are commonly used to determine internal states of a system based on measurements of other states. Observers are often applied in cases where the observed states cannot be measured because mounting a sensor is either impractical or too expensive. Observers can also be used simply to improve the quality of measured signals. For example, a resolver measures motor position, but in doing so, it adds considerable phase lag. An observer removes such phase lag. By supplying the observer with the same input data as supplied to the physical system the observer determines estimated values of particular entities or states of the system, which can be used to control the system by comparing at least one of the estimated values to a reference value.

The prior art method requires the use of an analogue to digital converter (ADC) for supplying a value of an entity of the system for comparison with an estimated value of a corresponding entity of the modeled system. Disadvantages of the use of ADC's with an observer are that they introduce a time delay, they allow limited conversion speed and limited resolution, and they increase complexity and costs of the system as a whole.

### OBJECT OF THE INVENTION

It is an object of the invention to solve the drawbacks of the prior art as described above.

### SUMMARY OF THE INVENTION

The above object of the invention is achieved by providing a method as described in claim 1.

Accordingly, no ADC is needed, so that all disadvantages associated with the use of an ADC are removed.

The above object of the invention is achieved also by providing an observer as described in claim 3.

### BRIEF DESCRIPTION OF THE DRAWINGS

The invention will become more gradually apparent from the following exemplary description in connection with the accompanying drawing. In the drawing:
Fig. 1 shows a diagram of an arrangement of a physical system which is observed by a prior art observer;
Fig. 2 shows a diagram of an arrangement of the physical system of Fig. 1 which is observed by an observer according to the invention; and
Fig. 3 shows a time diagram of an entity of the physical system and a corresponding entity of a modeled system of the observer of Fig. 2.

### DETAILED DESCRIPTION OF EXAMPLES

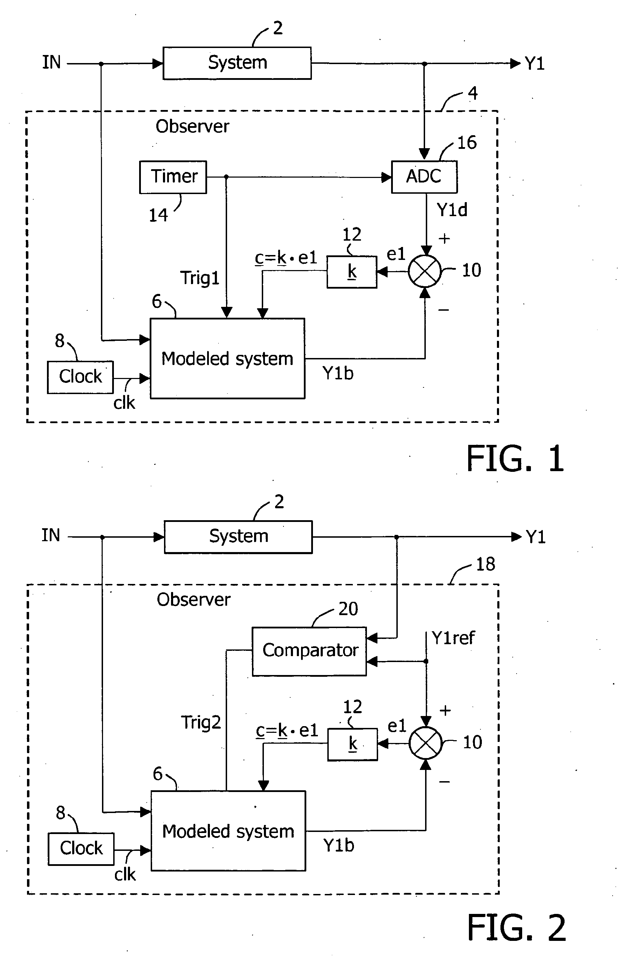

The diagram of the prior art arrangement shown in Fig. 1 shows basically a physical system 2 and an observer 4. The observer 4 comprises a mathematical model 6 of the physical system 2, a clock 8, a subtracting member 10, a vector multiplier 12, a timer 14 and an analogue to digital converter (ADC) 16.

The clock 8 supplies the mathematical model or modeled system 6 with clock pulses clk. With each clock pulse the model 6 is evaluated, that is, dependent on recent input values and previous evaluated values it determines values of entities of the model 6. The model 6 is designed such that certain entities Y1b, Y2b, Y3b, ... of entities of the model 6 correspond to entities Y1, Y2, Y3, ... of the physical system 2. The model 6 is supplied with that (those) input(s) IN, which is (are) supplied to the physical system 2 also. Therefore, with a properly designed model 6, with each evaluation of the model 6, said certain entities Y1b, Y2b, Y3b, ... of the model 6 should have values which are identical to values of the corresponding entities Y1, Y2, Y3, ... of the physical system 2. Therefore also, the values of said certain entities Y1b, Y2b, Y3b, ... of the model are called estimated values and, for simplicity, are referred to in here as Y1b, Y2b, Y3b, ... also.

The estimated values Y1b, Y2b, Y3b, ... can be used for further processing, such as for control purposes, instead of using values of the entities Y1, Y2, Y3, ... of the physical system, in which latter case measuring of the entities Y1, Y2, Y3, ... of the physical system would be required. By doing so, the arrangement as a whole can be made physically relatively simple with reduced costs for installation and maintenance.

However, the model 6 may not be perfect, that is, operating exactly identical to the physical system 2. Therefore it is known to compensate for differences between real values and related estimated values as explained below.

At least one entity, for example Y1, of the physical system 2 is monitored. In fact, the monitored entity Y1 is measured and its measured value is converted into a digital value Y1d by ADC 16. The model 6 is designed to provide an estimated value (Y1b) of an entity of the model 6 which corresponds to said monitored entity Y1.

The estimated value Y1b is subtracted from the digital value Y1d by subtracting member 10 to provide an estimated difference or difference e1.

The multiplier 12 multiplies el by a vector k. Elements k1, k2, k3, ... of vector k are associated with different entities Y1b, Y2b, Y2b, ... , respectively, of the model. As a result, the multiplier 12 provides a vector c consisting of each element ki (i=1, 2, 3, ...) of vector k times the difference e1. The vector c is supplied to the model 6. The vector c is stored and refreshed with each event Trigl, which is generated with fixed intervals by the timer 14. It is only during the trigger events Trigl that it is necessary to operate the ADC 16, the subtracting member 10 and the multiplier 12.

The elements c1, c2, c3, ... of vector c are used to compensate entities Y1b, Y2b, Y3b, ... of the model 6, respectively, in particular by adding them to obtain Y1b+c1, Y2b+c2, Y3b+c3, ... , respectively, and such that the difference el is decreased.

The use of an ADC with the prior art observer 4 shown in Fig. 1 has drawbacks. It introduces a time delay, it allows limited conversion speed and limited resolution, and it increases complexity.

The arrangement shown in Fig. 2 comprises an observer 18 according to the invention, which is different from the prior art observer 4 to alleviate the drawbacks of the prior art observer 4.

The observer 18 shown in Fig. 2 differs from the observer 4 shown in Fig. 1 by that the timer 14 and the ADC 16 of observer 4 are omitted and a comparator 20 is added. Further, instead of a real time value of the monitored entity Y1 of the physical system a given reference value Y1ref, which is associated with said entity Y1, is supplied to the subtracting member 10. The comparator 20 compares the analogue type entity Y1 of the physical system 2 and its associated reference value Y1ref to provide a binary output, of which the logical level changes when the compared values Y1 and Y1ref become equal. The occurrence of such level change is used to trigger the model 6 to carry out the compensation of estimated values as described with reference to Fig. 1.

If the compared values Y1 and Y1 ref become equal, the values supplied to the subtracting element 10 are identical to Y1b and Y1. Therefore, at that time observer 18 operates the same way as observer 4 of Fig. 1 for the same, equal values of Y1 and Y1ref. The major and advantageous difference between both observers is, however, that observer 18 of Fig. 2 is obsolete of an expensive, speed limiting, complexity increasing analogue to digital converter.

With the prior art observer 4 the triggering event represented by Trigl occurs at regular, fixed intervals. With the observer 18 according to the invention the triggering event represented by Trig2 occurs at times which are unknown on beforehand and which will be irregular in general.

It must be contemplated that a change of Trig2 happens often enough within a certain observation interval. Therefore the reference value Y1ref must be selected properly within a value range of the associated entity Y1 of the physical system 2. That is a matter of design and required specifications of the arrangement and is not per se part of the invention.

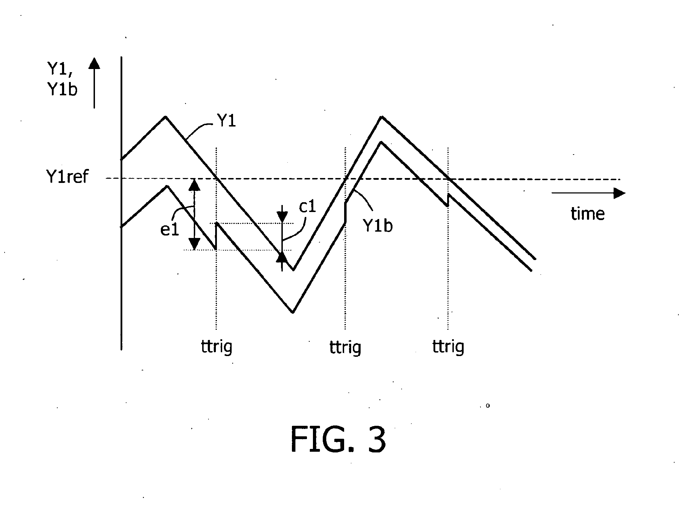

Fig. 3 shows a time diagram of said one identity Y1 of the physical system 2 and entity Y1b of the model 6 corresponding with said one entity Y1.

As illustrated by Fig. 3, at times ttrig the comparator 20 encounters an identity or a change of sign of a difference between its inputs, with the result that the compensation vector c is calculated and the value of estimated entities Y1b, Y2b, Y3b, ... are compensated by adding to it the appropriate element c1, c2, c3, ... of compensating vector c.

To be able to perform the compensating of estimated values Y1b, Y2b, Y3b, ... the value of the monitored entity Y1 of the physical system 2 should become and/or pass (cross) the reference value Y1ref at least once.

The method and observer according to the invention as described above can be modified by a skilled person within the scope of the invention as described by the claims.

For example, the above method and observer can be applied for any number of monitored entities Y1, Y2, Y3... , given reference values Y1ref, Y2ref, Y3ref... , estimated entities Y1b, Y2b, Y3b... , and differences e1, e2, e3... , respectively. The triggering event (Trig2) may then be defined by the occurrence of any monitored entity Y1, Y2, Y3... becoming equal to its associated reference value Y1ref, Y2ref, Y3ref..., respectively.

## Claims

1. A method for determining estimated states of a physical system (2) by using an observer (4,18), wherein the observer is supplied with an entity (Y1) to be monitored, which comprises a mathematical model (6) of the physical system, the mathematical model is supplied with values of input entities (IN) supplied to the physical system also, to provide estimated values of entities (Y1b, Y2b, Y3b, ...) of and by the mathematical model, at an occurrence (ttrig) of a triggering event (Trig2) a monitored entity (Y1) related value (Y1d, Y1ref) is compared with a related estimated value (Y1b) of the monitored entity (Y1) to provide an error value (e1), and the error value is used for correction of the estimated values **characterized in that**, the monitored entity (Y1) related value is a given reference value (Y1ref), the monitored entity (Y1) is compared with the reference value (Y1ref), and the triggering event (Trig2) is the occurrence where (ttrig) the monitored entity (Y1) becomes equal to the reference value (Y1ref).

2. Method according to claim 1, **characterized in that** two or more entities (Y1, Y2, Y3, ...) of the physical system (2) are monitored, the monitored entities (Y1, Y2; Y3, ...) are compared with given reference values (Y1ref, ...) related to the monitored entities, respectively, and the triggering event (ttrig) is the occurrence (Trig2) where any monitored entity (Y1, Y2, Y3, ...) becomes equal to its related reference value.

3. An observer (4,18) for determining estimated states of a physical system (2), wherein the observer is supplied with an entity (Y1) of the system to be monitored, comprising a mathematical model (6) of the physical system, the mathematical model is supplied with values of input entities (IN) supplied to the physical system also, to provide estimated values of entities (Y1b, Y2b, Y3b, ...) of and by the mathematical model, at the occurrence (ttrig) of a triggering event (Trig2) subtracting means (10) subtract the estimated value (Y1b) of the related monitored entity (Y1) from a monitored entity (Y1) related value (Y1d, Y1ref) to provide an error signal (e1), and the error signal is used for correction of the estimated values, **characterized in that**, comparator means (20) are provided which compare the monitored entity (Y1) with a given reference value (Y1ref), and the comparator means determine the occurrence (ttrig) of the triggering event (Trig2) where the monitored entity (Y1) becomes equal to the reference value (Y1ref).

4. Observer according to claim 3, **characterized in that** the mathematical model is supplied with two or more entities (Y1, Y2, Y3, ...) of the physical system (2), the comparator means are suitable to compare each monitored entity with a given reference value associated with the monitored entity, and the comparator means determine the occurrence (ttrig) of the triggering event (Trig2) where any monitored entity becomes equal to its associated reference value.

## Patentansprüche

1. Verfahren zur Bestimmung von geschätzten Zuständen eines physikalischen Systems (2) durch Verwenden eines Beobachters (4,18), wobei dem Beobachter eine zu überwachende Entität (Y1) zugeführt wird, wobei der Beobachter ein mathematisches Modell (6) des physikalischen Systems umfasst, das mathematische Modell mit Werten von, dem physikalischen System ebenfalls zugeführten Eingabeentitäten (IN) versorgt wird, um geschätzte Werte von Entitäten (Y1b, Y2b, Y3b, ...) des mathematischen Modells und durch dieses vorzusehen, ein auf die überwachte Entität (Y1) bezogener Wert (Y1d, Y1ref) bei Auftreten (ttrig) eines Triggerereignisses (Trig2) mit einem zugeordneten, geschätzten Wert (Y1b) der überwachten Entität (Y1) verglichen wird, um einen Fehlerwert (e1) vorzusehen, und der Fehlerwert zur Korrektur der geschätzten Werte verwendet wird, **dadurch gekennzeichnet, dass** der auf die überwachte Entität (Y1) bezogene Wert ein vorgegebener Referenzwert (Y1ref) ist, die überwachte Entität (Y1) mit dem Referenzwert (Y1ref) verglichen wird und das Triggerereignis (Trig2) das Ereignis ist, bei dem (ttrig) die überwachte Entität (Y1) gleich dem Referenzwert (Y1ref) wird.

2. Verfahren nach Anspruch 1, **dadurch gekennzeichnet, dass** zwei oder mehrere Entitäten (Y1, Y2, Y3, ...) des physikalischen Systems (2) überwacht werden, die überwachten Entitäten (Y1, Y3, Y3, ...) mit vorgegebenen Referenzwerten (Y1ref,...), die jeweils auf die überwachten Entitäten bezogen sind, verglichen werden, und das Triggerereignis (ttrig) das Ereignis (Trig2) ist, bei dem eine überwachte Entität (Y1, Y2, Y3, ...) gleich ihrem zugeordneten Referenzwert wird.

3. Observer (4,18) zur Bestimmung von geschätzten Zuständen eines physikalischen Systems (2), wobei dem Beobachter eine Entität (Y1) des zu überwachenden Systems zugeführt wird, wobei der Beobachter ein mathematisches Modell (6) des physikalischen Systems umfasst, das mathematische Modell mit Werten von, dem physikalischen System ebenfalls zugeführten Eingabeentitäten (IN) versorgt wird, um geschätzte Werte von Entitäten (Y1b, Y2b, Y3b, ...) des mathematischen Modells und durch dieses vorzusehen, Subtrahiermittel (10) bei Auftreten (ttrig) eines Triggerereignisses (Trig2) den geschätzten Wert (Y1b) der zugeordneten, überwachten Entität (Y1) von einem, auf die überwachte Entität (Y1) bezogenen Wert (Y1d, Y1ref) subtrahieren, um ein Fehlersignal (e1) vorzusehen, und das Fehlersignal zur Korrektur der geschätzten Werte verwendet wird, **dadurch gekennzeichnet, dass** Komparatormittel (20) vorgesehen sind, welche die überwachte Entität (Y1) mit einem vorgegebenen Referenzwert (Y1ref) vergleichen, und die Komparatormittel das Auftreten (ttrig) des Triggerereignisses (Trig2), bei dem die überwachte Entität (Y1) gleich dem Referenzwert (Y1ref) wird, bestimmen.

4. Beobachter nach Anspruch 3, **dadurch gekennzeichnet, dass** das mathematische Modell mit zwei oder mehreren Entitäten (Y1, Y2, Y3, ...) des physikalischen Systems (2) versorgt wird, die Komparatormittel geeignet sind, um jede überwachte Entität mit einem, der überwachten Entität zugeordneten, vorgegebenen Referenzwert zu vergleichen und die Komparatormittel das Auftreten (ttrig) des Triggerereignisses (Trig2), bei dem eine überwachte Entität gleich ihrem zugeordneten Referenzwert wird, bestimmen.

## Revendications

1. Procédé pour déterminer les états estimés d'un système physique (2) en utilisant un observateur (4, 18), dans lequel l'observateur reçoit une entité (Y1) à contrôler, comprenant un modèle mathématique (6) du système physique, le modèle mathématique recevant des valeurs d'entités d'entrée (IN) également fournies au système physique, pour fournir des valeurs estimées des entités (Y1b, Y2b, Y3b, ...) de et par le modèle mathématique, à une occurrence (ttrig) d'un événement de déclenchement (Trig2) une valeur connexe (Y1d, Y1ref) d'une entité contrôlée (Y1) est comparée avec une valeur estimée connexe (Y1b) de l'entité contrôlée (Y1) pour fournir une valeur d'erreur (e1), et la valeur d'erreur est utilisée pour la correction des valeurs estimées,
**caractérisé en ce que** la valeur connexe de l'entité contrôlée (Y1) est une valeur de référence donnée (Y1ref), l'entité contrôlée (Y1) est comparée à la valeur de référence (Y1ref), et l'événement de déclenchement (Trig2) est l'occurrence (ttrig) dans laquelle l'entité contrôlée (Y1) devient égale à la valeur de référence (Y1ref).

2. Procédé selon la revendication 1, **caractérisé en ce que** deux ou plus entités (Y1, Y2, Y3, ...) du système physique (2) sont contrôlées, les entités contrôlées (Y1, Y2, Y3, ...) sont comparées aux valeurs de référence (Y1ref, ...) données liées aux entités contrôlées, respectivement, et l'événement de déclenchement (ttrig) est l'occurrence (Trig2) dans laquelle une quelconque entité contrôlée (Y1, Y2, Y3, ...) devient égale à sa valeur de référence connexe.

3. Observateur (4, 18) pour déterminer les états estimés d'un système physique (2), dans lequel l'observateur reçoit une entité (Y1) du système à surveiller, comprenant un modèle mathématique (6) du système physique, le modèle mathématique recevant les valeurs d'entités d'entrée (IN) également fournies au système physique, pour fournir les valeurs estimées des entités (Y1b, Y2b, Y3b, ...) de et par le modèle mathématique, à l'occurrence (ttrig) d'un événement de déclenchement (Trig2), des moyens de soustraction (10) soustraient la valeur estimée (Y1b) de l'entité contrôlée (Y1) contrôlée d'une valeur connexe (Y1d, Y1ref) d'une entité contrôlée (Y1) pour fournir un signal d'erreur (e1), et le signal d'erreur est utilisé pour la correction des valeurs estimées, **caractérisé en ce que** des moyens de comparateur (20) sont fournis qui comparent l'entité contrôlée (Y1) à une valeur de référence donnée (Y1ref), et les moyens de comparateur déterminent l'occurrence (ttrig) de l'événement de déclenchement (Trig2) dans lequel l'entité contrôlée (Y1) devient égale à la valeur de référence (Y1ref).

4. Observateur selon la revendication 3, **caractérisé en ce que** le modèle mathématique reçoit deux ou plus entités (Y1, Y2, Y3, ...) du système physique (2), les moyens de comparateur sont adaptés pour comparer chaque entité contrôlée avec une valeur de référence donnée associée à l'entité contrôlée, et les moyens de comparateur déterminent l'occurrence (ttrig) de l'événement de déclenchement (Trig2) dans lequel toute entité contrôlée devient égale à sa valeur de référence associée.
